# EUROPEAN PATENT APPLICATION

(11) **EP 4 098 630 A1**
(43) Date of publication of application: **07.12.2022**
(21) Application number: 21176885.8
(22) Date of filing: 31.05.2021
(51) Int. Cl.: C03C 17/00, C03C 17/23, C03C 17/30, C03C 17/28

(54) **METHOD FOR COATING GLASS CONTAINERS**

(71) Applicant: Optitune Oy, 90590 Oulu (FI)
(72) Inventor: LEGRAND, Sacha, 90590 Oulu (FI); PESONEN, Matti, 90590 Oulu (FI); HADZIC, Admir, 90590 Oulu (FI); LEIVO, Jarkko, 90590 Oulu (FI); KUVAJA, Rauna-Leena, 90590 Oulu (FI); HANNU-KUURE, Milja, 90590 Oulu (FI); KÄRKKÄINEN, Ari, 90590 Oulu (FI)
(74) Representative: Maiwald GmbH

(57) **Abstract**

The present invention relates to a method for hard coating glass containers comprising the steps of:
• Providing a heated glass container;
• Applying a coating composition on the outer surface of the heated glass container;
• Annealing the applied coating composition onto the outer surface of the heated glass container to obtain a coated glass container;
wherein the coating composition comprises a metal and/or metalloid alcoholate, such as an alcoholate of titanium(IV), zirconium (IV), aluminium (III), tantalum (V), silicon (IV) and/or germanium (IV), in a solvent with a boiling point above 90°C,
a coated glass container coated with the method as described above or below and the use of a coating composition comprising a metal alcoholate in a solvent with a boiling point above 90°C for increasing the hardness of a coated glass container.

## Description

The present invention relates to a method for hard coating glass containers with a coating composition comprises a metal and/or metalloid alcoholate in a solvent with a boiling point above 90°C.

### Technical background

Coatings are applied to glass containers for various purposes. Such purposes include promoting adhesion between the surface of a glass container and another substance, colouring and introducing decorative effects on the surface the glass container, controlling reflectance thereof, increasing electrical conductivity over the surface of the glass container, increasing strength and durability of the glass container, increasing abrasion and scratch resistance of the surface of the glass container and controlling the slippage of the glass containers.

Glass derives its strength and durability in part from an unblemished surface. Scratches or flaws in the surface of a glass container substantially reduce its strength and durability. Additionally, during the production process as well as during industrial use of the glass containers, such as filling or cleaning for re-use, the glass containers are transported over long conveyors, so that a slippery surface of the glass container improves the slippage of the glass container on the conveyor and simplifies the transport of the glass containers.

Further, for some applications, such as perfume bottles or special beverage bottles, glass containers with decorative effects on the surface such as e.g. pearlescent effects are used.

Glass containers can be coated at various points in the processing line. They can be coated immediately after formation, at the hot end of the processing line, and/or at the cold end of the line prior to packaging. Coating at the cold end alone has proved unsatisfactory in that no protection is afforded during the earlier steps of processing where the containers can contact machinery or each other and thereby become scratched prior to application of a coating. The earlier in the processing line a coating is applied, the greater will be the scratch resistance of the surface as it proceeds through that processing line. By coating the article after formation and while it still retains its heat of formation there is less likelihood that the article will be abraded during processing. Greater processing line efficiencies can thus be obtained by placing articles closer together during processing and increasing the speed of conveyors.

In praxis glass containers are coated using a hot-end coating directly after production based on tin oxide coating layer using a coating composition comprising an organic tin chloride such as monobutyltin trichloride as primer coating layer, which is followed by a cold-end coating using a polyethylene wax after annealing of the glass containers. In this process glowing hot glass containers come right from the moulding process and are transported through a chamber that is filled with organic tin chloride vapour. Air knives are used to prevent the organic tin chloride to enter the inside the bottle or contact cap contact area as organic tin chloride may be toxic and may corrode metal caps.

Due to the problems of organic tin chloride in behalf of likely toxicity and cause of corrosion the glass industry aims to replace the hot-end glass coating with tin oxide with a safer hot-end coating.

Thus, there is a need in the art for a method of hot-end coating of glass containers which applies a coating that is less toxic and corrosive that a tin oxide coating and shows good scratch resistance, slippage and if wanted introduces decorative effects.

### Summary of the invention

The present invention relates to a method for coating glass containers comprising the steps of:
- Providing a heated glass container;
- Applying a coating composition on the outer surface of the heated glass container;
- Annealing the applied coating composition onto the outer surface of the heated glass container to obtain a coated glass container;
wherein the coating composition comprises a metal and/or metalloid alcoholate, such as an alcoholate of titanium(IV), zirconium (IV), aluminium (III), tantalum (V), silicon(IV), and/or germanium (IV) or mixtures thereof, in a solvent with a boiling point above 90°C.

Further, the present invention relates to coated glass container coated with the method as described above or below.

Still further, the present invention relates to the use of a coating composition comprising a metal alcoholate in a solvent with a boiling point above 90°C for increasing the hardness of a coated glass container.

### Detailed Description of the invention

### Method

In one aspect the present invention relates to a method for coating glass containers comprising the steps of:
- Providing a heated glass container;
- Applying a coating composition on the outer surface of the heated glass container;
- Annealing the applied coating composition onto the outer surface of the heated glass container to obtain a coated glass container;
wherein the coating composition comprises a metal and/or metalloid alcoholate, such as an alcoholate of titanium(IV), zirconium (IV), aluminium (III), tantalum (V), silicon (IV) and/or germanium (IV) or mixtures thereof, in a solvent with a boiling point above 90°C.

The glass container to be coated can be any sort of glass container, which can be coated in a hot-end coating process, i.e. a glass container which can be coated at a temperature of at least 500°C.

The glass container can be a bottle, jar, can, drinking glassware, tableware, kitchenware, decorative glassware, laboratory glassware or others.

The glass container can be a container, which is open at the top, or a container, which is adapted to a top lid, such as a screw cap, a cap, a crown cork, a plug, a cork, a clip lock or others suitable for closing a glass container.

In one embodiment the heated glass container preferably has a temperature of at least 500°C, such as from 500°C to 1500°C, preferably from 525°C to 1200°C, more preferably from 550°C to 1000°C and most preferably from 575°C to 900°C.

The temperature of the heated glass container thereby depends on the composition of the glass and its melting temperature. The heated glass container has a temperature below the melting temperature of its glass in order to avoid deterioration.

The heated glass container can be provided immediately after formation without an active cooling step. The heated glass container is thereby preferably provided immediately after formation before the annealing step. The coating method then relates to a hot-end coating method.

The heated glass container can also be a cold glass container, which is heated in at least one heating step. Preferably the cold glass container is heated in at least two heating steps. In a first heating step the cold glass container is preferably heated and annealed at a temperature of from 150° to 350°C, preferably 175°C to 300°C for a period of from 20 min to 300 min, preferably 30 min to 250 min.

In a second heating step the preheated and annealed glass container is then heated to a temperature of at least 500°C, such as from 500°C to 1500°C, preferably from 525°C to 1200°C, more preferably from 550°C to 1000°C and most preferably from 575°C to 900°C.

In another embodiment the heated glass container preferably has a temperature of below 500°C, such as from 100°C to below 500°C, preferably from 125°C to 450°C, more preferably from 150°C to 400°C and most preferably from 175°C to 350°C.

The heated glass container can be provided immediately after formation and the annealing step preferably without additional heating or cooling steps. The coating method the relates to a cold-end coating method.

The heated glass container can also be a cold glass container, which is heated in at least one heating step, preferably in one heating step.

On the outer surface of the heated glass container a coating composition is applied.

The coating composition is preferably applied by any suitable means for applying a coating onto a glass surface, such as by spraying, blowing or vaporization.

It is preferably preferred that the coating composition is applied by vaporization preferably as such that the heated glass container is subjected to the vapour of the coating composition. The vaporization thereby in practice can be accomplished by transporting the heated glass container through an area, which is saturated with the vapour of the coating composition.

The coating composition is preferably annealed onto the outer surface of the heated glass container at a temperature of from 100°C to 250°C, more preferably from 125°C to 230°C and most preferably from 150°C to 220°C.

The annealing time is preferably in the range of from 10 min to 60 min, more preferably from 15 min to 50 min, most preferably from 20 min to 45 min.

The coating on the other surface of the coated glass container is preferably in the range of from 10 nm to 500 nm, more preferably from 20 nm to 400 nm and most preferably from 30 nm to 300 nm.

The coating composition comprises a metal and/or metalloid alcoholate in a solvent with a boiling point above 90°C.

The metal and/or metalloid alcoholate is preferably selected from an alcoholate of titanium(IV), zirconium (IV), aluminium (III), tantalum (V), germanium (IV), silicon (IV) or mixtures thereof, more preferably an alcoholate of titanium (IV), zirconium (IV), aluminium (III), and silicon (IV) or mixtures thereof, most preferably an alcoholate of titanium(IV) and/or silicon (IV).

The metal and/or metalloid alkoholate can be any metal alcoholate which is suitable to hydrolyse to the accordant metal or metalloid oxide, such as TiO₂, ZrO₂, Al₂O₃, GeO₂, Ta₂O₅, SiO₂ or mixtures thereof, during the annealing step.

In the following the abbreviation "metal alcoholate" includes alcoholates of metals, such as the above mentioned alcoholates of titanium(IV), zirconium (IV), aluminium (III), tantalum (V), and metalloids, such as the above mentioned alcoholates of germanium (IV) and silicon (IV), and mixtures thereof.

The metal alkoholate can comprise the alkyl alcoholates are selected from linear or branched C1 to C10-alkyl alcoholates, preferably from linear or branched C1 to C6-alkyl alcoholates, more preferably from C1 to C4-alkyl alcoholates, such as methyl alcoholate, ethyl alcoholate, isopropyl alcoholate or *tert*-butyl alcoholate or mixtures thereof, preferably from isopropyl alcoholate or *tert*-butyl alcoholate and most preferably from isopropyl alcoholate.

The metal alcoholate can further comprise silane alcoholates, wherein the silane alcoholates are alcoholates of one or more silane components selected from
i) silane monomers of formula (I)

   R¹ₐSiX₄₋ₐ (I)

   wherein
   R¹ is selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
   X is independently a hydrolysable group or a hydrocarbon residue under the proviso that at least one X is a hydrolysable group; and
   a is an integer 0 to 3;
ii) bi-silane monomers of formula (II)

   (R¹)ₐX¹₃₋ₐSi-Y-Si(R²)ₐX²₃₋ₐ, (II)

   wherein
   R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
   X¹ and X² are independently a hydrolysable group or a hydrocarbon residue under the proviso that at least one residue of X¹ and X² is a hydrolysable group;
   a is an integer of 0 to 2
   and
   Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹
   and Z² are each selected from a direct bond or -O-; and
      mixtures thereof.

The coating composition preferably is a solution of the coating composition. As a consequence a solvent with a boiling point above 90°C is preferably suitable for solving the metal alcoholate and any other component in the coating composition.
The solvent with a boiling point above 90°C is preferably an organic solvent.

The solvent with a boiling point above 90°C preferably comprises linear or branched C4 to C10 alkyl alcohols, 1-(isobutyryloxy)-2,2,4-trimethylpentan-3-yl hydrogencarbonate, propylene glycol propyl ether, propylene glycol methyl ether, propylene glycol methyl ether acetate, propylene glycol n-propyl ether and/or 2,2,4-trimethyl-1,3-pentanediol-monoisobutyrate.

It is especially preferred that the solvent with a boiling point above 90°C comprises 2,2,4-trimethyl-1,3-pentanediol-monoisobutyrate. The solvent with a boiling point above 90°C can consist of 2,2,4-trimethyl-1,3-pentanediol-monoisobutyrate or can comprise 2,2,4-trimethyl-1,3-pentanediol-monoisobutyrate and another component, such as another solvent with a boiling point above 90°C as described herein, and/or an acid, such as acetic acid.

When the solvent with a boiling point above 90°C comprises 2,2,4-trimethyl-1,3-pentanediol-monoisobutyrate it has been found that slippage properties of the resultant coated glass container are improved.

It is preferred that the method of the invention comprises a further step for preparing the coating composition:
- Solving the metal alcoholate in a solvent with a boiling point above 90°C to obtain the coating composition.

The coating composition preferably further comprises a siloxane polymer comprising one or more monomers selected from
i) silane monomers of formula (I)

   R¹ₐSiX₄₋ₐ (I)

   wherein
   R¹ is independently selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
   X is independently a hydrolysable group or a hydrocarbon residue; and
   a is an integer 0 to 3;
ii) bi-silane monomers of formula (II)

   (R¹)ₐX¹₃₋ₐSi-Y-Si(R²)ₐX²₃₋ₐ, (II)

   wherein
   R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
   X¹ and X² are independently a hydrolysable group or a hydrocarbon residue under the proviso that at least one residue of X¹ and X² is a hydrolysable group;
   a is an integer of 0 to 2
   and
   Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹
   and Z² are each selected from a direct bond or -O-; and
      mixtures thereof.

The siloxane polymer can be a siloxane homopolymer, i.e. the siloxane polymer consists of one silane monomer or bi-silane monomer as defined herein.

The siloxane polymer can be a siloxane copolymer, i.e. the siloxane polymer comprises two or more, such as two to ten, preferably two to six, more preferably two to five silane monomers and/or bi-silane monomers as defined herein.

Additionally, the coating composition preferably further comprises one or more silane components selected from
i) silane monomers of formula (I)

   R¹ₐSiX₄₋ₐ (I)

   wherein
   R¹ is independently selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
   X is independently a hydrolysable group or a hydrocarbon residue; and
   a is an integer 0 to 3;
ii) bi-silane monomers of formula (II)

   (R¹)ₐX¹₃₋ₐSi-Y-Si(R²)ₐX²₃₋ₐ, (II)

   wherein
   R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
   X¹ and X² are independently a hydrolysable group or a hydrocarbon residue;
   a is an integer of 0 to 2
   and
   Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-; and
      mixtures thereof.

Preferably the silane components are defined the same way as the monomers of the siloxane polymer.

For the monomers of the siloxane polymer and the silane components the following preferred specifications apply:
For the silane monomer of formula (I)
X is independently a hydrolysable group or a hydrocarbon residue.

The hydrocarbon residue is in particular a linear or branched alkyl group.

The hydrolysable group hydrolysable group is in particular an alkoxy group. The alkoxy groups of the silane monomer is preferably selected from the group of radicals having the formula

-O-R² (III)

wherein R² stands for a linear or branched alkyl group having 1 to 10, preferably 1 to 6 carbon atoms, and optionally exhibiting one or two substituents selected from the group of halogen, hydroxyl, vinyl, epoxy and allyl. Especially preferred are methoxy and ethoxy groups.

According to an embodiment, the silane monomer can be a tri- or tetraalkoxysilane.

In another embodiment the silane monomer does not comprise a hydrolysable group.

Particularly suitable silane monomers are selected from the group of triethoxysilane, tetramethoxysilane, tetraethoxysilane, methyltriethoxysilane, methyltrimethoxysilane, ethyltriethoxysilane, n-propyltriethoxysilane, n-butyltriethoxysilane, n-hexyltriethoxysilane, n-octyltrimethylsilane, methyl diethoxyvinylsilane, dimethyl diethoxysilane, phenyltrimethoxysilane, dimethoxymethylphenylsilane, phenantrene-9-triethoxysilane, vinyltrimethoxysilane, (3-glycidyloxypropyl)trimethoxysilane, (3-glycidyloxypropyl)triethoxysilane, 3-trimethoxysilylpropylmethacrylate, aminopropyltrimethoxysilane, methacryloxypropyltrimethoxysilane, methacryloxypropyltriethoxysilane, acryloxypropyl-trimethoxysilane, allyltrimethoxysilane, epoxycyclohexylethyltrimethoxysilane, diphenylsilanediol, dimethyldimethoxysilane, 1-(2-(Trimethoxysilyl)ethyl)cyclohexane-3,4-epoxide, 1H, 1H, 2H, 2H-perfluorooctyltrimethoxysilane, 1H, 1H, 2H, 2H- perfluorodecyltrimethoxysilane, trimethoxy (3,3,3-trifluoropropyl)silane and combinations thereof.

Especially preferred are tetramethoxysilane, tetraethoxysilane, methyltriethoxysilane, methyltrimethoxysilane, n-propyltriethoxysilane, n-hexyltriethoxysilane, n-octyltrimethylsilane, dimethoxymethylphenylsilane, (3-glycidyloxypropyl)trimethoxysilane, (3-glycidyloxypropyl)triethoxysilane, 3-trimethoxysilylpropylmethacrylate, allyltrimethoxysilane, 1H, 1H, 2H, 2H- perfluorooctyltrimethoxysilane, 1H, 1H, 2H, 2H-perfluorodecyltrimethoxysilane and combinations thereof.

Most preferred are methyltriethoxysilane, n-octyltrimethylsilane, 3-trimethoxysilylpropylmethacrylate, and combinations thereof.

For the bi-silane monomers of formula (II)
X¹ and X² are independently a hydrolysable group or a hydrocarbon residue.
The hydrocarbon residue is in particular a linear and branched alkyl group.

The hydrolysable group hydrolysable group is in particular an alkoxy group. The alkoxy groups of the bi-silane monomer is preferably selected from the group of radicals having the formula

-O-R³ (IV)

wherein R³ stands for a linear or branched alkyl group having 1 to 10, preferably 1 to 6 carbon atoms, and optionally exhibiting one or two substituents selected from the group of halogen, hydroxyl, vinyl, epoxy and allyl. Especially preferred are methoxy and ethoxy groups.

Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-.

In the bivalent "alkylene" groups and other similar aliphatic groups, the alkyl residue (or residue derived from an alkyl moiety) stands for 1 to 10, preferably 1 to 8, or 1 to 6 or even 1 to 4 carbon atoms, examples include ethylene and methylene and propylene.

"Arylene" stands for an aromatic bivalent group containing typically 1 to 3 aromatic rings, and 6 to 18 carbon atoms. Such groups are exemplified by phenylene (e.g. 1,4-phenylene and 1,3-phenylene groups) and biphenylene groups as well as naphthylene or anthracenylene groups.

The alkylene and arylene groups can optionally be substituted with 1 to 5 substituents selected from hydroxy, halo, vinyl, epoxy and allyl groups as well as alkyl, aryl and aralkyl groups.

The term "phenyl" includes substituted phenyls such as phenyltrialkoxy, in particular phenyltrimethoxy or triethoxy, and perfluorophenyl. The phenyl as well as other aromatic or alicyclic groups can be coupled directly to a silicon atom or they can be coupled to a silicon atom via a methylene or ethylene bridge.

Exemplary bi-silanes include 1,2-bis(trimethoxysilyl)methane, 1,2-bis(triethoxysilyl)methane, 1,2-bis(trimethoxysilyl)ethane, 1,2-bis(triethoxysilyl)ethane, 1-(dimethoxymethylsilyl)-1-(trimethoxysilyl)methane, 1-(diethoxymethylsilyl)-1-(triethoxysilyl)methane, 1-(dimethoxymethylsilyl)-2-(trimethoxysilyl)ethane, 1-(diethoxymethylsilyl)-2-(triethoxysilyl)ethane, bis(dimethoxymethylsilyl)methane, bis(diethoxymethylsilyl)methane, 1,2-bis(dimethoxymethylsilyl)ethane, 1,2-bis(diethoxymethylsilyl)ethane, 1,2-bis(trimethoxysilyl)benzene, 1,2-bis(triethoxysilyl)benzene, 1,3-bis(trimethoxysilyl)benzene, 1,3-bis(triethoxysilyl)benzene, 1,4-bis(trimethoxysilyl)benzene, 1,4-bis(triethoxysilyl)benzene, 4,4'-Bis(triethoxysilyl)-1,1'-biphenyl; 1,4-Bis(triethoxysilyl)benzene; 1,3-Bis(triethoxysilyl)benzene and combinations thereof.

Especially preferred are 1,2-bis(trimethoxysilyl)methane, 1,2-bis(triethoxysilyl)methane, 1,2-bis(trimethoxysilyl)ethane, 1,2-bis(triethoxysilyl)ethane and combinations thereof.

Mostly preferred are 1,2-bis(trimethoxysilyl)ethane, 1,2-bis(triethoxysilyl)ethane and combinations thereof.

In the present context, the term "bi-silane" is used for designating a compound comprising two organic residues, in particular silicon containing residues, which are linked to the same atom(s). In case of two identical (or even symmetrical) organic residues, the term "bis-silane" is also used.

The siloxane polymer is preferably prepared by the steps comprising solving silane components selected from one or more silane monomer(s) and/or bi-silane monomer(s) in a solvent, at least partially hydrolysing and polymerizing the silane components in the presence of water and an acidic catalyst to obtain a solution comprising siloxane polymer.

The solvent is preferably selected from methanol, ethanol, isopropanol, *tert*-butanol, acetone, ethyl methyl ketone, tetrahydrofuran, propylene glycol methyl ether, propylene glycol methyl ether acetate, hexane, cyclohexane, n-pentane, toluene or mixtures thereof, more preferably from methanol, ethanol, isopropanol, *tert*-butanol or mixtures thereof, still more preferably from isopropanol and *tert-butanol* and most preferably from isopropanol.

The acidic catalyst is preferably aqueous acid e.g. nitric acid or hydrochloric acid or another mineral or organic acid.

Due to the presence of the acidic catalyst the water used in the hydrolysis step has typically a pH of less than 7, preferably less than 6, in particular less than 5.

Polymerization is preferably a condensation polymerization.

The hydrolysis and polymerization step preferably includes refluxing. A typical refluxing time is 2 h.

Additionally, the siloxane polymer in further step can be crosslinked, especially for increasing the molecular weight of the siloxane polymer.
The crosslinking preferably is induced by thermal or radiation initiation. For initiating crosslinking the polymer must comprise an active group which is capable of achieving crosslinking to adjacent siloxane polymer chains upon a thermal or radiation initiation. Exemplary active groups are epoxy, vinyl, allyl and methacrylate groups.

For radical initiation the presence of a radical initiator is necessary. Suitable radical initiators are organic peroxides or organic azo compound. Suitable radical initiators are e.g. azobisisobutyronitrile, azobis(2,4-dimethylvaleronitrile), 1,1'-Azobis(cyclohexanecarbonitrile), 2,2'-azobis(2-methylpropane), 4,4'-azobis(4-cyanovaleric acid). Such radical initiators as well as other suitable radical initiators are well known in the art.

Exemplary radiation initiation is subjecting the mixture to UV light. Radical initiators and photoacid/base generators (both non-ionic and ionic and cationic and anionic) can be used as UV initiators. Such initiators are well known in the art.

In the siloxane polymer also free Si-OH-groups can be protected with an end capping. Such an end capping can be obtained by a nucleophilic substitution reaction of an Si-OH group of the siloxane polymer with silane components with a single hydrolysable group such as alkoxytrialkylsilanes or trialkylsilanemonohalides.
The alkyl groups are preferably selected from linear or branched alkyl groups having from 1 to 10 carbon atoms, preferably from 1 to 4 carbon atoms.
The alkoxy group is preferably selected from C1 to C4 alkoxy groups, most preferably from methoxy and ethoxygroups.
The halide is preferably selected from chloride or bromide, most preferably chloride.

Especially preferred silane components for end capping are methoxytrimethylsilane, ethoxytrimethylsilane, methoxytriethylsilane, ethoxytriethylsilane, trimethylsilyl chloride, triethylsilyl chloride and mixtures thereof.

Mostly preferred are ethoxytrimethylsilane and trimethylsilyl chloride.

End-capping usually increases the chain length of the siloxane polymer, e.g. approximately doubles the chain length of the siloxane polymer.
Additionally end-capping of the remaining Si-OH groups usually improves the shelf-life of the polysiloxane and improves its stability towards ageing processes (Journal of Applied Polymer Science, 2021, 138 (21), 50467).

The general conditions for preparing a siloxane polymer are generally known in the area and are exemplarily disclosed e.g. in WO 2009/068755 A1 or WO 2016/146896 A1.

In one preferred embodiment the coating composition comprises the metal alcoholate and the siloxane polymer in the solvent with a boiling point above 90°C. In said embodiment the coating composition can additionally comprise the one or more silane components as described herein.

In said embodiment the method of the invention can further comprise the following steps for preparing the coating composition:
- Providing a solution of one or more silane components selected from
   i) silane monomers of formula (I)

      R¹ₐSiX₄₋ₐ (I)

      wherein
      R¹ is selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
      X is independently a hydrolysable group or a hydrocarbon residue under the proviso that at least one X is a hydrolysable group; and
      a is an integer 0 to 3;
   ii) bi-silane monomers of formula (II)

      (R¹)₃Si-Y-Si(R²)₃, (II)

      wherein
      R¹ and R² are independently selected from hydrogen and a group consisting of linear or branched alkyl, cycloalkyl, alkenyl, alkynyl, (alkyl)acrylate, epoxy, allyl, vinyl, alkoxy and aryl having 1 to 6 rings, and wherein the group is substituted or unsubstitued; and
      Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or - O-; and
         mixtures thereof
         in a first solvent having a boiling point of not more than 85 °C;
- at least partially hydrolysing and polymerizing the silane components in the presence of water and an acidic catalyst to obtain a solution comprising siloxane polymer;
- adding linear or branched C1 to C10-alkyl metal alcoholate to the solution comprising siloxane polymer;
- changing the first solvent to the solvent with a boiling point above 90°C to obtain the coating composition.

The first solvent is preferably selected from methanol, ethanol, isopropanol, *tert*-butanol, acetone, ethyl methyl ketone, tetrahydrofuran, hexane, cyclohexane, n-pentane or mixtures thereof, more preferably from methanol, ethanol, isopropanol, *tert*-butanol or mixtures thereof, still more preferably from isopropanol and *tert-butanol* and most preferably from isopropanol.

In one preferred embodiment the first solvent has the same chemical structure as the alkyl alcoholate of the metal alcoholate.

In said embodiment the coating composition can comprise the siloxane polymer and unreacted silane components. The unreacted silane components can be removed from the coating composition but are preferably left in the coating composition.

These unreacted silane components can react with the linear or branched C1 to C10-alkyl metal alcoholate in a transesterification reaction so that at least part of the linear or branched C1 to C10-alkyl alcoholates are exchanged by silane alcoholates.
The resulting linear or branched C1 to C10-alkyl alcohols preferably have a boiling point of not more than 85 °C and are removed together with the first solvent.

The first solvent is preferably exchanged by the solvent with a boiling point above 90°C by adding the solvent with a boiling point above 90°C to the coating composition and heating the coating composition to a temperature above the boiling point of the first solvent but below the boiling point of the solvent with a boiling point above 90°C.

### Coated glass container

According to another aspect, the present invention relates to coated glass container coated with the method as described above or below.

All aspects of the glass container or the method according to the invention as described herein apply to the coated glass container of said aspect of the invention.

Depending on the desired application the coating composition can be chosen to obtain one or more of the following properties:
Depending on the coating composition the coated glass container can show decorative effect such as a pearlescent effect. Such coated glass containers especially qualify for decorative applications such as decorative glassware or lifestyle products, such as perfume bottles or cosmetic glass jars or bottles.

The coated glass containers preferably show an outer surface with low visual defects, such as colour changes, dustiness, opaque spots, non-uniformities of the coating.

Additionally, the coated glass containers preferably show good optical properties such as a high light transmission, a high refractive index and low haze.

Further the coated glass containers preferably show a high scratch resistance, preferably either by the scratching test as described below or by scratching the coated glass container with steel wool.

Additionally, the coated glass containers preferably show a high slippage. Thereby, it has been found that the slippage can further be increased by addition of 2,2,4-trimethyl-1,3-pentanediol-monoisobutyrate to the solvent with a boiling point above 90°C.

The coated glass container preferably shows a low abrasion.

Preferably the coated glass container also shows and improved surface friction.

Further, the coated glass container preferably shows high water contact angles.

The coating can be applied as hot-end coating or cold-end coating and thus increases variability of the production process of the glass container.

Finally, by using a metal alcoholate instead of organic tin chlorides such as monobutyltin trichloride corrosion of metal caps can be significantly reduced. These metal alcoholates also have a low toxicity.

### Use

In yet a further aspect the present invention relates to the use of a coating composition comprising a metal alcoholate in a solvent with a boiling point above 90°C for increasing the hardness of a coated glass container.

All aspects of the glass container or the method according to the invention as described herein apply to the coated glass container of said aspect of the invention.

It is preferred that the solvent with a boiling point above 90°C comprises 2,2,4-trimethyl-1,3-pentanediol-monoisobutyrate for increasing the slipping properties of the coated glass container.

The coating composition can also be used for increasing resistance to abrasion and scratching of the coated glass container.

Further, the coating composition can be used for reducing the gliding resistance, reducing the friction surface of a coated glass container.

The coating composition can also be used for increasing the optical properties such as improved reflection, improved transmission, reduced haze, of a coated glass container.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

In the description of the preparation of the coating compositions the following abbreviations are used:
- BTESE: 1,2-Bis(triethoxysilyl)ethane
- MTEOS: methyltriethoxysilane
- MEMO: 3-trimethoxysilylpropylmethacrylate (commerically available as Dynasilan^{®} MEMO)
- n-octylTMS: n-octyltrimethylsilane

- IPA: isopropanol
- BuOH: n-butanol
- Texanol: 2,2,4-Trimethyl-1,3-pentanediol monoisobutyrate

- Ti(iPropyl)₄: titanium tetraisopropoxide

- HNO₃: nitric acid
- RT: room temperature, about 23°C
- Eq: molar equivalents

- MBTC: monobutyltin trichloride

### Subjective evaluation methods

### • Visual inspection

The coated glass jar or bottle is visually inspected for any visual defects, such as colour changes, dustiness, opaque spots, non-uniformities of the coating ("Leopard effect"), etc. The coated bottles are then classified in a three-stage categorization with
0 = lots of defects, bad appearance
3 = no defects, best results

### • Slipping properties

Two bottles are gently slid against each other and the slippage of the coatings is categorized in a six-stage categorization.
0 = slippage as experienced between two uncoated bottles
3 = slippage as experienced between two hot coated bottles coated with a state-of-the-art MBTC coating (coating composition 17)
5 = slippage as experienced between one hot coated bottle coated with a state-of-the-art MBTC coating (coating composition 17) and one cold coated bottle coated with a polyethylene wax coating

### • Scratch resistance

Two bottles are forced to scratch against each other and the amount of observed scratches is categorized in a four-stage categorization.
0 = amount of scratches as experienced when scratching two uncoated bottles against each other
2 = amount of scratches as experienced when scratching two hot coated bottles coated with a state-of-the-art MBTC coating (coating composition 17) against each other
3 = amount of scratches as experienced when scratching one hot coated bottle coated with a state-of-the-art MBTC coating (coating composition 17) and one cold coated bottle coated with a polyethylene wax coating against each other

### Preparation of coating composition

### Coating Composition 1

In a round bottom flask, BTESE (300 g, 0.846 mol; 1 eq) is dissolved in IPA (160 g). HNO3 (0.1M; 18.29 g; 0.2 eq) is added dropwise and the reaction mixture is stirred at RT for 2h. Ti(iPropyl)₄ (721.35 g, 2.538 mol; 3 eq) is added dropwise over 30 min. The resulting reaction mixture is stirred at RT for 30 min. Texanol (73.20 g; 0.338 mol; 0.4 eq) and BuOH (62.71 g; 0.846 mol; 1 eq) are added. The low boiling point solvents are evaporated under vacuum (P = 700 mbar; T water bath = 97 C). Solvent evaporated = 183.74 g.

### Coating composition 2

In a round bottom flask, MEMO (250 g, 1.007 mol; 1 eq) is dissolved in IPA (120 g). HNO3 (0.1M; 21.78 g; 0.2 eq) is added dropwise and the reaction mixture is stirred at RT for 2h. Ti(iPropyl)₄ (858.32 g, 3.021 mol; 3 eq) is added dropwise over 30 min. The resulting reaction mixture is stirred at RT for 30 min. Texanol (87.13 g; 0.338 mol; 0.4 eq) and BuOH (74.63 g; 0.846 mol; 1 eq) are added. The low boiling point solvents are evaporated under vacuum (P = 700 mbar; T water bath = 97 C). Solvent evaporated = 208.64 g.

### Coating composition 3

In a round bottom flask, n-octylTMS (500 g, 2.133 mol; 1 eq) is dissolved in IPA (140 g). HNO3(0.1M; 23.06 g; 0.2 eq) is added dropwise and the reaction mixture is stirred at RT for 2h. Ti(iPropyl)₄ (606.24 g, 2.133 mol; 3 eq) is added dropwise over 30 min. The resulting reaction mixture is stirred at RT for 30 min. A mixture of texanol - acetic acid (294,75 g; 2.133 mol; 1 eq) is added. The low boiling point solvents are evaporated under vacuum (P = 700 mbar; T water bath = 97 C). Solvent evaporated = 206.36 g.

### Coating composition 4

In a round bottom flask, MTEOS (200 g, 1.12 mol; 1 eq) is dissolved in IPA (140 g). HNO3 (0.1M; 12.08 g; 0.2 eq) is added dropwise and the reaction mixture is stirred at RT for 2h. Ti(iPropyl)₄ (956.4 g, 3.37 mol; 3 eq) is added dropwise over 30 min. The resulting reaction mixture is stirred at RT for 30 min. A mixture of texanol - acetic acid (155.5 g; 1.12 mol; 1 eq) is added. The low boiling point solvents are evaporated under vacuum (P = 700 mbar; T water bath = 97 C). Solvent evaporated = 165.21 g.

### Coating composition 5

In a round bottom flask, BTESE (125 g, 0.353 mol; 1 eq) is dissolved in IPA (50 g). HNO3 (0.1M; 7.6 g; 0.2 eq) is added dropwise and the reaction mixture is stirred at RT for 2h. Ti(iPropyl)₄ (298.45 g, 1.05 mol; 3 eq) is added dropwise over 30 min. The resulting reaction mixture is stirred at RT for 30 min. Texanol (30.54 g; 0.1412 mol; 0.4 eq) and BuOH (26.16 g; 0.353 mol; 1 eq) are added. The low boiling point solvents are evaporated under vacuum (P = 700 mbar; T water bath = 97 C). Solvent evaporated = 25.37 g.

### Coating composition 6

In a round bottom flask, MEMO (46.62 g, 0.188 mol; 1 eq) is dissolved in IPA (30 g). HNO3 (0.1M; 2.03 g; 0.2 eq) is added dropwise and the reaction mixture is stirred at RT for 2h. Ti(iPropyl)₄ (160.31 g, 0.564 mol; 3 eq) is added dropwise over 30 min. The resulting reaction mixture is stirred at RT for 30 min. Texanol (8.13 g; 0.0376 mol; 0.4 eq) and BuOH (6.97 g; 0.094 mol; 1 eq) are added. The low boiling point solvents are evaporated under vacuum (P = 700 mbar; T water bath = 97 C). Solvent evaporated = 17.01 g.

### Coating composition 7A

In a round bottom flask, n-octylTMS (65.64 g, 0.28 mol; 1 eq) is dissolved in IPA (40 g). HNO3(0.1M; 3.04 g; 0.2 eq) is added dropwise and the reaction mixture is stirred at RT for 2h. Ti(iPropyl)₄ (238.76 g, 0.84 mol; 3 eq) is added dropwise over 30 min. The resulting reaction mixture is stirred at RT for 30 min. BuOH (5,19 g; 0.07 mol; 1 eq) is added. The low boiling point solvents are evaporated under vacuum (P = 700 mbar; T water bath = 97 C). Solvent evaporated = 206.36 g.

### Coating composition 7B

In a round bottom flask, n-octylTMS (65.64 g, 0.28 mol; 1 eq) is dissolved in IPA (40 g). HNO3(0.1M; 3.04 g; 0.2 eq) is added dropwise and the reaction mixture is stirred at RT for 2h. Ti(iPropyl)₄ (238.76 g, 0.84 mol; 3 eq) is added dropwise over 30 min. The resulting reaction mixture is stirred at RT for 30 min. Octanol (9,12 g; 0.07 mol; 1 eq) is added. The low boiling point solvents are evaporated under vacuum (P = 700 mbar; T water bath = 97 C). Solvent evaporated = 206.36 g.

### Coating composition 7C

In a round bottom flask, n-octylTMS (65.64 g, 0.28 mol; 1 eq) is dissolved in IPA (40 g). HNO3(0.1M; 3.04 g; 0.2 eq) is added dropwise and the reaction mixture is stirred at RT for 2h. Ti(iPropyl)₄ (238.76 g, 0.84 mol; 3 eq) is added dropwise over 30 min. The resulting reaction mixture is stirred at RT for 30 min. Texanol (9,12 g; 0.07 mol; 1 eq) is added. The low boiling point solvents are evaporated under vacuum (P = 700 mbar; T water bath = 97 C). Solvent evaporated = 206.36 g.

### Coating composition 7D

In a round bottom flask, n-octylTMS (65.64 g, 0.28 mol; 1 eq) is dissolved in IPA (40 g). HNO3(0.1M; 3.04 g; 0.2 eq) is added dropwise and the reaction mixture is stirred at RT for 2h. Ti(iPropyl)₄ (238.76 g, 0.84 mol; 3 eq) is added dropwise over 30 min. The resulting reaction mixture is stirred at RT for 30 min. A mixture of texanol - acetic acid (9,67 g; 0.07 mol; 1 eq) is added. The low boiling point solvents are evaporated under vacuum (P = 700 mbar; T water bath = 97 C). Solvent evaporated = 206.36 g.

### Coating composition 8A

In a round bottom flask, n-octylTMS (150 g, 0.64 mol; 1 eq) is dissolved in IPA (40 g). HNO3(0.1M; 6.92 g; 0.2 eq) is added dropwise and the reaction mixture is stirred at RT for 2h. Ti(iPropyl)₄ (181.9 g, 0.64 mol; 1 eq) is added dropwise over 30 min. The resulting reaction mixture is stirred at RT for 30 min. A mixture of texanol - acetic acid (29,75 g; 0.21 mol; 0.3 eq) and BuOH (15,57 g; 0.21 mol; 0.3 eq) are added. The low boiling point solvents are evaporated under vacuum (P = 700 mbar; T water bath = 97 C). Solvent evaporated = 206.36 g.

### Coating composition 8B

In a round bottom flask, n-octylTMS (150 g, 0.64 mol; 1 eq) is dissolved in IPA (40 g). HNO3(0.1M; 6.92 g; 0.2 eq) is added dropwise and the reaction mixture is stirred at RT for 2h. Ti(iPropyl)₄ (181.9 g, 0.64 mol; 1 eq) is added dropwise over 30 min. The resulting reaction mixture is stirred at RT for 30 min. Texanol (45.4 g; 0.21 mol; 0.3 eq) and BuOH (15.57 g; 0.21 mol; 0.3 eq) are added. The low boiling point solvents are evaporated under vacuum (P = 700 mbar; T water bath = 97 C). Solvent evaporated = 206.36 g.

### Coating composition 8C

In a round bottom flask, n-octylTMS (150 g, 0.64 mol; 1 eq) is dissolved in IPA (40 g). HNO3(0.1M; 6.92 g; 0.2 eq) is added dropwise and the reaction mixture is stirred at RT for 2h. Ti(iPropyl)₄ (181.9 g, 0.64 mol; 1 eq) is added dropwise over 30 min. The resulting reaction mixture is stirred at RT for 30 min. A mixture of texanol - acetic acid (29 g; 0.21 mol; 0.3 eq) is added. The low boiling point solvents are evaporated under vacuum (P = 700 mbar; T water bath = 97 C). Solvent evaporated = 206.36 g.

### Coating composition 9

In a round bottom flask, MTEOS (100 g, 0.561 mol; 1 eq) is dissolved in IPA (25 g). HNO3 (0.1M; 6.07 g; 0.2 eq) is added dropwise and the reaction mixture is stirred at RT for 2h. Ti(iPropyl)₄ (159.45 g, 3.37 mol; 3 eq) is added dropwise over 30 min. The resulting reaction mixture is stirred at RT for 30 min. Texanol (16.22 g; 0.075 mol; 0,4 eq) and BuOH (13.86 g; 0.187 mol; 1 eq) is added. The low boiling point solvents are evaporated under vacuum (P = 700 mbar; T water bath = 97 C). Solvent evaporated = 27.02 g.

### Coating composition 10

In a round bottom flask, BTESE (125 g, 0.353 mol; 1 eq) is dissolved in IPA (50 g). HNO3 (0.1M; 7.6 g; 0.2 eq) is added dropwise and the reaction mixture is stirred at RT for 2h. Ti(iPropyl)₄ (298.45 g, 1.05 mol; 3 eq) is added dropwise over 30 min. The resulting reaction mixture is stirred at RT for 30 min. A mixture of texanol - acetic acid (1 eq) is added. The low boiling point solvents are evaporated under vacuum (P = 700 mbar; T water bath = 97 C).

### Coating composition 11

In a round bottom flask, BTESE (125 g, 0.353 mol; 1 eq) is dissolved in IPA (50 g). HNO3 (0.1M; 7.6 g; 0.2 eq) is added dropwise and the reaction mixture is stirred at RT for 2h. Ti(iPropyl)₄ (199 g, 0.70 mol; 2 eq) is added dropwise over 30 min. The resulting reaction mixture is stirred at RT for 30 min. Texanol (0,2 eq) is added. The low boiling point solvents are evaporated under vacuum (P = 700 mbar; T water bath = 97 C).

### Coating composition 12A

In a round bottom flask, Ti(iPropyl)₄ (3 eq) is mixed with BuOH (1 eq) and the mixture is heated to 90 C for 30 min.

### Coating composition 12B

In a round bottom flask, Ti(iPropyl)₄ (3 eq) is mixed with BuOH (1 eq) and the mixture is heated to 90 C for 30 min. Texanol (0,5 eq) is added.

### Coating composition 13

In a round bottom flask, n-octylTMS (1 eq) is dissolved in IPA (10 g). HNO3(0.1M; 0.2 eq) is added dropwise and the reaction mixture is stirred at RT for 2h. BuOH (1 eq) is added. The low boiling point solvents are evaporated under vacuum (P = 700 mbar; T water bath = 97 C).

### Coating composition 14

Hexaltrimethoxysilane (1 eq) is mixed in IPA (10 g). HNO3(0.1 M; 0.2 eq) is added dropwise and the reaction mixture is stirred at RT for 2h. BuOH (1 eq) is added and the low boing point solvents are evaporated under vaccum (P = 700 mbar; T water bath = 97 C).

### Coating composition 15

Zirconiumdioxide (1 eq) is mixed in IPA (10 g). HNO3(0.1 M; 0.2 eq) is added dropwise and the reaction mixture is stirred at RT for 2h. BuOH (1 eq) is added and the low boing point solvents are evaporated under vaccum (P = 700 mbar; T water bath = 97 C).

### Coating composition 16

Aluminiumoxide (Al₂O₃) (1 eq) is mixed in IPA (10 g). HNO3(0.1 M; 0.2 eq) is added dropwise and the reaction mixture is stirred at RT for 2h. BuOH (1 eq) is added and the low boing point solvents are evaporated under vaccum (P = 700 mbar; T water bath = 97 C).

### Coating composition 17 (MBTC)

As coating composition a state of the art coating composition comprising MBTC (monobutyltim trichloride) was used.

### Coating experiments

### a) Pearlescent effect

Coating compositions 1, 2, 3 and 4 were coated on hot glass bottles. Thereby, the colour of the coating compositions and the coating results were monitored.
The coating was applied as follows:
200 mL of the solution of the coating composition was put in a 3 necks round bottom flask at room temperature and stirred. The reaction mixture was then heated and the temperature was measured regularly. Air was injected in the system and the vapour was pushed via an exhaust line to a bottle (heated at very high temperatures, about 600°C) to be coated.
After procedure, the coated jar was placed into annealing oven at T = 210°C for 30 min.

The observations about monitored colour, vapour formation and sample coating are listed in Tables 1-4 for coating compositions 1-4

**Table 1: monitored colour, vapour formation and sample coating of coating composition 1**

| Time [min] | Temperature [°C] | Solution colour | Boiling Y/N | Comments/ Sample Coating |
|---|---|---|---|---|
| 5 | 65 | Champagne | N | |
| 10 | 84 | Champagne | N | Lots of bubbles |
| 11 | 89 | Champagne | Y | A bit of foam |
| 12 | 91 | Champagne | Y | Poor vapour formation |
| 19 | 103 | Champagne | Y | Poor vapour formation |
| 21 | 107 | Champagne | Y | Poor vapour formation; 1^{st} bottle: no pearlescent effect |
| 23 | 115 | Champagne | Y | About to stop boiling |
| 24 | 120 | Champagne | Y/N | Good vapour formation with air injection |
| 26 | 123 | Champagne | N | |
| 31 | 146 | Champagne | N | 2^{nd} bottle: no pearlescent effect |
| 36 | 160 | Bit darker | N | Good vapour formation with air injection |
| 41 | 181 | Bit darker | N | 3^{rd} bottle: very light pearlescent effect |
| 44 | 185 | Olive oil | N | |
| 50 | 199 | Amber | N | |
| 51 | 200 | Amber | N | 4^{th} bottle: light pearlescent effect |
| 53 | 204 | Cognac | N | Solution gets darker quickly |
| 55 | 207 | Tea | N | |
| 61 | 217 | Light coffee | N | 5^{th} bottle: pearlescent effect |
| 62 | 202 | Coffee | N | 6^{th} bottle: 2 coating rounds, pearlescent effect |
| 64 | 212 | Dark coffee | N | |

**Table 2: monitored colour, vapour formation and sample coating of coating composition 2**

| Time [min] | Temperature [°C] | Solution colour | Boiling Y/N | Comments/ Sample Coating |
|---|---|---|---|---|
| 10 | 84 | Champagne | N | |
| 11 | 85.5 | Champagne | Y | |
| 15 | 90 | Champagne | Y | poor vapour formation; 1^{st} bottle: no pearlescent effect |
| 25 | 105 | Champagne | Y/N | poor vapour formation; 2^{nd} bottle: no pearlescent effect |
| 28 | 115 | Champagne | N | |
| 30 | 124 | Champagne | Y/N | |
| 32 | 127 | Champagne | N | |
| 35 | 137 | Champagne | N | good vapour formation; 3^{rd} bottle: pearlescent effect |
| 38 | 141 | Champagne | N | |
| 42 | 150 | Champagne | N | |
| 45 | 158 | Champagne | N | 4^{th} bottle: light pearlescent effect |
| 50 | 169 | Olive oil | N | |
| 55 | 184 | Amber | N | 5^{th} bottle: pearlescent effect |
| 57 | 184 | Cognac | N | |
| 63 | 193 | Tea | N | |
| 65 | 195 | Coffee | N | 6^{th} bottle: pearlescent effect |
| 70 | 198 | Dark coffee | N | |
| 72 | 199.5 | Black | N | |
| 75 | 204 | Black | N | 7^{th} bottle: pearlescent effect |
| 77 | 202 | black | N | 8^{th} bottle: 2 coating rounds, strong pearlescent effect |

**Table 3: monitored colour, vapour formation and sample coating of coating composition 3**

| Time [min] | Temperature [°C] | Solution colour | Boiling Y/N | Comments/ Sample Coating |
|---|---|---|---|---|
| 8 | 66 | Champagne | N | |
| 13 | 86 | Champagne | Y | Starts boiling, some foam, no vapour without air injection |
| 23 | 98 | Champagne | Y | no vapour without air injection |
| 32 | 120 | Champagne | Y | some vapour without air injection |
| 34 | 125 | Champagne | Y | About to stop boiling, poor vapour formation |
| 36 | 130 | Champagne | Y | poor vapour formation; 1^{st} bottle: no pearlescent effect |
| 38 | 138 | Champagne | Y | Vapour formation without air injection |
| 46 | 147 | Champagne | Y | poor vapour formation; 2^{nd} bottle: no pearlescent effect |
| 48 | 150 | Champagne | N | Stop boiling |
| 52 | 161 | Olive oil | N | |
| 56 | 175 | Olive oil | N | good vapour formation; 3^{rd} bottle: no pearlescent effect |
| 60 | 180 | Amber | N | good vapour formation |
| 63 | 186 | Cognac | N | Very good vapour formation |
| 65 | 190 | Tea | N | |
| 66 | 195 | Dark tea | N | good vapour formation; 4^{th} bottle: no pearlescent effect |
| 68 | 196 | Light coffee | N | |
| 72 | 198 | Coffee | N | |
| 74 | 202 | Coffee | N | Massive vapour formation; 5^{th} bottle: light pearlescent effect |
| 76 | 195 | Dark coffee | N | 6^{th} bottle: 2 coating rounds, pearlescent effect |

**Table 4: monitored colour, vapour formation and sample coating of coating composition 4**

| Time [min] | Temperature [°C] | Solution colour | Boiling Y/N | Comments/ Sample Coating |
|---|---|---|---|---|
| 11 | 82 | Champagne | N | |
| 12 | 87 | Champagne | Y | Starts boiling |
| 20 | 107 | Champagne | Y | 1^{st} bottle: not enough vapour for coating |
| 22 | 114 | Champagne | Y | good vapour with air injection |
| 30 | 140 | Champagne | N | 2^{nd} bottle; not enough vapour for coating |
| 38 | 170 | Champagne | Y | Starts boiling again |
| 40 | 175 | Champagne | Y | good vapour formation; 3^{rd} bottle: no pearlescent effect |
| 42 | 178 | Champagne | N | |
| 48 | 197 | Champagne | Y | Some boiling |
| 50 | 201 | Bit yellowing | Y | good vapour formation; 4^{th} bottle: no pearlescent effect |
| 52 | 202 | Olive oil | N | |
| 54 | 208 | Galliano | Y | Some boiling |
| 56 | 212 | Amber | Y | Good boiling |
| 60 | 214 | Cognac | Y | Massive vapour formation; 5^{th} bottle: light pearlescent effect |
| 62 | 215 | Tea | N | Some boiling |
| 64 | 218 | Tea | Y | |
| 66 | 220 | Dark tea | Y | |
| 68 | 220 | Light coffee | Y | |
| 70 | 221 | Light coffee | Y | Massive vapour formation; 7^{th} bottle: light pearlescent effect |
| 76 | 223.4 | Coffee | Y | |
| 80 | 223.4 | Dark coffee | Y | Massive vapour formation; 7^{th} bottle: pearlescent effect |
| 81 | 200 | Dark coffee | Y | 8^{th} bottle: 2 coating rounds, pearlescent effect |

The coated bottles were subjected to a slipping and scratch resistance tests. A summary of the slipping and scratch resistance tests is shown in Table 5:

**Table 5: Summary of the Slipping tests**

| | Composition 1 | | Composition 2 | | Composition 3 | | Composition 4 | |
|---|---|---|---|---|---|---|---|---|
| | Slipping | Scratch | Slipping | Scratch | Slipping | Scratch | Slipping | Scratch |
| Bottles 1-2 | 1.5 | 1 | 4 | 1 | 1.5 | 1 | 0 | 1 |
| Bottles 2-3 | 3 | 1 | 5 | 1 | 1 | 1 | 0 | 1 |
| Bottles 3-4 | 3.5 | 1 | 5 | 2.5 | 1.5 | 1 | 0 | 1 |
| Bottles 4-5 | 3.5 | 1 | 5 | 2.5 | 2 | 1 | 0 | 1 |
| Bottles 5-6 | 1.5 | 1 | 4 | 2 | 2 | 1 | 0 | 1 |
| Bottles 6-7 | 1.5 | 1 | | | | | 0 | 1 |
| Bottles 7-8 | 3 | 1 | | | | | 0 | 2 |

### b) Mechanical properties

In a first coating experiment coating compositions 5, 7A, 8A, 8C, 10, 11, 12A, 12B, 13, 14, 15 and 16 were coated on hot glass jars.

The coating was applied as follows:
A glass jar was heated in an IR furnace at a temperature of 600°C for 30 min and was then directly put on a circulating turntable.

In the meantime the solution of the coating composition was put in a 3 necks round bottom flask at room temperature and stirred. The solution of the coating composition was heated until vapour formation was clearly detectable. Air was injected in the system and the vapour was pushed via an exhaust line to the outer surface of the heated glass jar (about 600°C).

In a first set of coating the jars were coated in two rounds of coating at an overall time of 30 seconds on a turntable.

In a second set of coating the jars were coated in one round of coating at an overall time of 15 seconds on a turntable.

In a third set of coating, the coating thickness (estimated 50 - 100 nm) was standardized by regulating air pressure and adjusting the smoke output nozzle close to the jar surface (10 nm). After procedure, the coated jar was placed into annealing oven at T = 210°C for 30 min.

The coated jars were visually inspected and subjected to a slipping and scratch resistance test. A summary of the slipping and scratch resistance tests of the first set of coating is shown in Table 6. A summary of the slipping and scratch resistance tests of the second set of coating is shown in Table 7.

**Table 6: Summary of the visual inspection and the slipping and scratch resistance tests of the first set of coating**

| Coating composition | Visual | Slipping | Scratch | Sum | Solution appearance |
|---|---|---|---|---|---|
| 5 | 2 | 4 | 2 | 8 | yellowish |
| 10 | 2 | 4 | 2.5 | 8.5 | yellowish |
| 11 | 1.5 | 4 | 2.5 | 8 | yellow |
| 7C | 1.5 | 2 | 2 | 5.5 | Slightly yellowish |
| 12A | 1 | 3 | 2 | 6 | Slightly yellowish |
| 12B | 1 | 3.5 | 2 | 6.5 | Slightly yellowish |
| 14 | 3 | 1 | 1 | 5 | |
| 15 | 3 | 1 | 1 | 5 | |
| 16 | 3 | 1.5 | 1 | 5.5 | |

**Table 7: Summary of the visual inspection and the slipping and scratch resistance tests of the first set of coating**

| Coating composition | Visual | Slipping | Scratch | Sum | Solution appearance |
|---|---|---|---|---|---|
| 5 | 2 | 4 | 2.5 | 8.53 | yellowish |
| 13 | 3 | 1 | 1 | 5 | Clear solution |
| 8A | 3 | 2 | 1.5 | 6.5 | yellow |
| 8C | 3 | 3.5 | 2.5 | 9 | yellowish |

In a second coating experiment coating compositions 5 and 17 were coated on hot glass bottles.

The coating was applied as follows:
A glass bottle was heated in two steps firstly for 1 h at 210 °C and afterwards in an IR furnace at a temperature of 600°C for 30 min and was then directly put on a circulating turntable.

In the meantime the solution of the coating composition was put in a 3 necks round bottom flask at room temperature and stirred. The solution of the coating composition was heated until vapour formation was clearly detectable. Air was injected in the system and the vapour was pushed via an exhaust line to the outer surface of the heated glass jar (about 600°C). The bottles were coated in one round of coating at an overall time of 15 seconds on a turntable.

Coating thickness was standardized to an estimated thickness of about 50 to 100 nm by regulating air pressure and adjusting the vapour output nozzle close to the bottle surface (about 10 mm).

After the coating procedure the coated bottle was placed into an annealing oven at 210°C for 30 min for annealing.

The coated bottles were visually inspected and subjected to a slipping and scratch resistance test. A summary of the slipping and scratch resistance tests is shown in Table 8.

**Table 8: Summary of the visual inspection and the slipping and scratch resistance tests**

| Coating composition | Visual | Slipping | Scratch | Sum | Solution appearance | Other observations |
|---|---|---|---|---|---|---|
| 5 | 2 | 4.5 | 2.5 | 9 | Clearish (slightly iridescent of too thick | Strong vapour formation |
| 17 | 2 | 3 | 2 | 7 | clear | Only light vapour formation |

## Claims

1. A method for coating glass containers comprising the steps of:
• Providing a heated glass container;
• Applying a coating composition on the outer surface of the heated glass container;
• Annealing the applied coating composition onto the outer surface of the heated glass container to obtain a coated glass container;
wherein the coating composition comprises a metal and/or metalloid alcoholate, such as an alcoholate of titanium(IV), zirconium (IV), aluminium (III), tantalum (V), silicon (IV) and/or germanium (IV), in a solvent with a boiling point above 90°C.

2. The method according to claim 1, wherein the coating composition further comprises a siloxane polymer comprising one or more monomers selected from
i) silane monomers of formula (I)
R¹ₐSiX₄₋ₐ (I)
wherein
R¹ is independently selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
X is independently a hydrolysable group or a hydrocarbon residue under the proviso that at least one X is a hydrolysable group; and
a is an integer 0 to 3;
ii) bi-silane monomers of formula (II)
(R¹)ₐX¹₃₋ₐSi-Y-Si(R²)ₐX²₃₋ₐ, (II)
wherein
R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
X¹ and X² are independently a hydrolysable group or a hydrocarbon residue under the proviso that at least one residue of X¹ and X² is a hydrolysable group; a is an integer of 0 to 2
and
Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-; and
mixtures thereof.

3. The method according to claim 1 or 2, wherein the coating composition further comprises one or more silane components selected from
i) silane monomers of formula (I)
R¹ₐSiX₄₋ₐ (I)
wherein
R¹ is independently selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted; X is independently a hydrolysable group or a hydrocarbon residue under the proviso that at least one X is a hydrolysable group; and
a is an integer 0 to 3;
ii) bi-silane monomers of formula (II)
(R¹)ₐX¹₃₋ₐSi-Y-Si(R²)ₐX²₃₋ₐ, (II)
wherein
R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
X¹ and X² are independently a hydrolysable group or a hydrocarbon residue under the proviso that at least one residue of X¹ and X² is a hydrolysable group;
a is an integer of 0 to 2
and
Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-; and
mixtures thereof.

4. The method according to any one of the preceding claims, wherein the metal and/or metalloid alcoholate comprises alkyl alcoholates, wherein the alkyl alcoholates are selected from linear or branched C1 to C10-alkyl alcoholates and/or silane alcoholates, wherein the silane alcoholates are alcoholates of one or more silane components selected from
i) silane monomers of formula (I)
R¹ₐSiX₄₋ₐ (I)
wherein
R¹ is selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
X is independently a hydrolysable group or a hydrocarbon residue under the proviso that at least one X is a hydrolysable group; and
a is an integer 0 to 3;
ii) bi-silane monomers of formula (II)
(R¹)ₐX¹₃₋ₐSi-Y-Si(R²)ₐX²₃₋ₐ, (II)
wherein
R¹ and R² are independently selected from hydrogen and a group consisting of linear or branched alkyl, cycloalkyl, alkenyl, alkynyl, (alkyl)acrylate, epoxy, allyl, vinyl and aryl having 1 to 6 rings, and wherein the group is substituted or unsubstitued;
X¹ and X² are independently a hydrolysable group or a hydrocarbon residue under the proviso that at least one residue of X¹ and X² is a hydrolysable group;
a is an integer of 0 to 2
and
Y is a linking group selected from bivalent unsubstituted or substituted aliphatic and aromatic groups, such as alkylene, arylene, -O-alkylene-O-; -O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-; and
mixtures thereof.

5. The method according to any one of the proceeding claims, further comprising the following steps for preparing the coating composition:
• Solving the metal and/or metalloid alcoholate in a solvent with a boiling point above 90°C to obtain the coating composition.

6. The method according to any one of claims 1 to 4, further comprising the following steps for preparing the coating composition:
• Providing a solution of one or more silane components selected from
i) silane monomers of formula (I)
R¹ₐSiX₄₋ₐ (I)
wherein
R¹ is selected from hydrogen and a group comprising linear and branched alkyl, cycloalkyl, alkenyl, alkynyl, (alkyl)acrylate, epoxy, allyl, vinyl and aryl having 1 to 6 rings, and wherein the group is substituted or unsubstituted;
X is independently a hydrolysable group or a hydrocarbon residue under the proviso that at least one X is a hydrolysable group; and
a is an integer 0 to 3;
ii) bi-silane monomers of formula (II)
(R¹)₃Si-Y-Si(R²)₃, (II)
wherein
R¹ and R² are independently selected from hydrogen and a group consisting of linear or branched alkyl, cycloalkyl, alkenyl, alkynyl, (alkyl)acrylate, epoxy, allyl, vinyl, alkoxy and aryl having 1 to 6 rings, and wherein the group is substituted or unsubstitued; and
Y is a linking group selected from bivalent unsubstituted or substituted aliphatic and aromatic groups, such as alkylene, arylene, -O-alkylene-O-; - O-arylene-O-; alkylene-O-alkylene, arylene-O-arylene; alkylene-Z¹C(=O)Z²-alkylene, arylene-Z¹C(=O)Z²-arylene and -O-alkylene-Z¹C(=O)Z²-alkylene-O-; -O-arylene-Z¹C(=O)Z²-arylene-O-, wherein Z¹ and Z² are each selected from a direct bond or -O-; and
iii) mixtures thereof
in a first solvent having a boiling point of not more than 85 °C;
• at least partially hydrolysing and polymerizing the silane components in the presence of water and an acidic catalyst to obtain a solution comprising siloxane polymer;
• adding linear or branched C1 to C10-alkyl metal and/or metalloid alcoholate to the solution comprising siloxane polymer;
• changing the first solvent to the solvent with a boiling point above 90°C to obtain the coating composition.

7. The method according to claim 6, wherein the first solvent is selected from methanol, ethanol, isopropanol, *tert*-butanol, acetone, ethyl methyl ketone, tetrahydrofuran, hexane, cyclohexane, n-pentane or mixtures thereof.

8. The method according to any one of the proceeding claims, wherein the solvent with a boiling point above 90°C comprises linear or branched C4 to C10 alkyl alcohols, 1-(isobutyryloxy)-2,2,4-trimethylpentan-3-yl hydrogencarbonate, propylene glycol propyl ether, propylene glycol methyl ether, propylene glycol methyl ether acetate, propylene glycol n-propyl ether and/or 2,2,4-trimethyl-1,3-pentanediol-monoisobutyrate.

9. The method according to any one of the proceeding claims, wherein the solvent with a boiling point above 90°C comprises 2,2,4-trimethyl-1,3-pentanediol-monoisobutyrate.

10. The method according to any one of the proceeding claims, wherein the coating composition is applied onto the outer surface of the heated glass container by spraying, blowing or vaporization.

11. The method according to any one of the proceeding claims, wherein the coating composition is annealed onto the outer surface of the heated glass container at a temperature of from 100°C to 250°C for 10 to 60 min.

12. A coated glass container coated with the method according to any one of the proceeding claims.

13. Use of a coating composition comprising a metal and/or metalloid alcoholate in a solvent with a boiling point above 90°C for increasing the hardness of a coated glass container.

14. The use according to claim 13 for one or more of increasing resistance to abrasion and scratching, reducing the gliding resistance, reducing the friction surface and/or increasing the optical properties such as improved reflection, improved transmission, reduced haze, of a coated glass container.

15. The use of claim 13 or 14, wherein the solvent with a boiling point above 90°C comprises 2,2,4-trimethyl-1,3-pentanediol-monoisobutyrate for increasing the slipping properties of the coated glass container.
